# EUROPEAN PATENT SPECIFICATION

(11) **EP 2 978 360 B1**
(45) Date of publication and mention of the grant of the patent: **23.08.2017**
(21) Application number: 13716235.0
(22) Date of filing: 28.03.2013
(51) Int. Cl.: A47L 15/42, D06F 58/20

(54) **HEAT PUMP WASHING APPARATUS**
WÄRMEPUMPENWASCHVORRICHTUNG
APPAREIL DE LAVAGE À POMPE À CHALEUR

(43) Date of publication of application: 03.02.2016
(73) Proprietor: Electrolux Appliances Aktiebolag, 105 45 Stockholm (SE)
(72) Inventor: CAVARRETTA, Francesco, 33080 Porcia (PN) (IT); VIGNOCCHI, Massimiliano, 33080 Porcia (PN) (IT)
(74) Representative: Electrolux Group Patents
(86) International application number: PCT/EP2013/056677
(87) International publication number: WO 2014/154278

(56) References cited:
- EP-A1- 2 471 434
- EP-A1- 2 497 856
- EP-A2- 2 206 824
- JP-A- 2008 048 810

## Description

The present invention relates to a washing apparatus for washing goods as, for example, clothes or dishes; e.g. the washing apparatus includes a dish washing machine or a laundry washing machine. The washing apparatus of the invention includes a heat pump.

In the present application, the laundry washing machine can be a laundry washing machine or a washing-drying machine (i.e. a washing machine which can both wash and dry the goods).

In a washing apparatus for washing goods, it is known to use an electric heater to heat water in a washing chamber. The water commonly is to be heated to a temperature between 20° and 95°, which requires an appreciable amount of energy.

In order to save energy consumption, it is also known to use a heat pump in place of or besides the electric heater for heating the water.

EP 2 096 203 discloses a household washing machine comprising a tub, a heater and a container. The container contains waste water (i.e. used process water) of a previous process phase (e.g., washing or rinsing phase). The household washing machine also comprises a heat pump comprising an evaporator thermally coupled to the container, a condenser, a compressor and an expansion valve. A heat pump medium is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced.

EP 2 224 049 discloses a cleaning device comprising a tub, a waste water tank for intermediate storage of waste water from the tub, a heat pump for extracting heat from the waste water tank and supplying it to process water in the tub, and a controller configured to partially freeze the waste water in the waste water tank and to melt at least part of the ice located in the waste water tank by supplying process water from the tub towards the end of a washing process.

EP 2 206 824 discloses a household appliance comprising a tub, a tank filled with fluid and a heat pump for extracting heat from the fluid contained in the tank and supplying the heat to the tub. The tank is a closed tank whose content is not changed within the framework of the normal process carried out by the household appliance. EP 2 206 824 states that a heat exchanger can be provided between a waste water line and the tank in order to transfer heat from the waste water into the fluid tank.

The Applicant has observed that, during operation of the heat pump in the prior art appliances, the fluid present in the tank is cooled down with respect to a starting temperature and, optionally, at least partially frozen. For example, in case the fluid in the tank is water, the water can turn into ice. The cooled/frozen fluid needs preferably to be regenerated, that is warmed up again towards the starting temperature, in order to be used again for a next, optionally immediately subsequent, process cycle. Indeed, a too cold or frozen liquid does not allow an optimal heat exchange during the subsequent washing cycle, hindering the appliance's performances. In case of ice generation, it is preferable that all the ice is melted before the next process cycle is started.

Moreover, during the cooling or freezing transition of the fluid inside the tank, water vapor may condense on the tank's external walls, so that water may drip therefrom or form droplets on the walls' surfaces. This phenomenon is possibly enhanced by the relatively humid environment in which the tank is located. The condensed water can have a negative impact on the functionalities of the apparatus, such as the electronic board and circuitry, the pump(s) and other elements, as well as it can cause customer's dissatisfaction due to the possible water leakage from the apparatus.

EP 2 096 203 and EP 2 224 049 disclose to use waste water of a previous process phase to replace the cooled waste water in the tank. However, as waste water is used, dirt deposition and/or bacteria proliferation can occur in the tank.

In order to avoid contamination of the tank with deposits from waste water from the tub, EP 2 206 824 discloses to use a closed tank and a heat exchanger between a waste contained in the tank.

However, the Applicant has observed that this solution provides low performances in terms of cooled/iced liquid regeneration in the tank.

In particular, with respect to the solution wherein the cooled/iced liquid is regenerated by replacement with waste water from a previous process phase, this solution might take longer time to regenerate the cooled/iced liquid and might not be able to guarantee full regeneration.

EP 2 471 434 A1 discloses a household appliance such as a dish washer or a washer-drier comprising a heat pump system having a consenser, a part of which being enclosed on a water tank and an evaporator, a part of which being enclosed on a cold fluid reservoir; the cold fluid reservoir can contain water, that is transferred by a pump toward an air-heat exchanger suitable to condens the moisture contained in the air flowing from the washing chamber.

EP 2 497 856 A1 discloses a laundry drier machine comprising a heat pump system having two heat exchangers positioned on the botton side of the machine; said heat exchangers are crossed by air forced through a fan, allowing the cool and the warm of the air coming from the laundry drum, allowing the separation of the moisture from said air; the moisture drops fall on a collecting tray placed below said heat exchanger; the collected moisture is forced by a pump toward a removable container positioned at the top part of the machine.

It is an object of the invention to provide an alternative washing apparatus including a heat pump.

It is a further object of the invention to provide a washing apparatus with a heat pump that has an efficient cooled/frozen liquid regeneration in the tank.

It is an additional object of the invention to provide a washing apparatus in which the problem of dripping water from the tank is solved or minimized.

It is another object of the invention to provide an improved washing apparatus with a heat pump that has improved design and construction, high reliability and long lifetime.

The Applicant has found that the above objects are achieved by a washing apparatus comprising a chamber for receiving goods to be washed and a heat pump associated with a liquid tank. The tank is in turn associated with an additional tank containing the former at least partially.

In this way, the additional tank can both collect the possible humidity forming on the tank's wall which would otherwise drip, and additionally be filled with another liquid, such as water, in order to perform a heat exchange with the fluid present in the tank, to improve and speed up the regeneration of the tank's fluid.

According to an aspect, the present invention relates to a washing apparatus, particularly a laundry washing machine, comprising
- a chamber for receiving goods to be washed,
- a tank having a bottom wall and adapted to contain a fluid,
- a heat pump system including a refrigerant circuit comprising a first heat exchanger being adapted to cool a refrigerant and to heat water to be used in the process chamber, a second heat exchanger being adapted to heat said refrigerant and to cool the fluid contained in the tank, a compressor arranged in the circuit between the first heat exchanger and the second heat exchanger, and a pressure lowering device arranged between the second heat exchanger and the first heat exchanger,
wherein it comprises an auxiliary tank, wherein the tank is housed at least in correspondence of its bottom wall in the auxiliary tank, a free volume remaining between the auxiliary tank and the tank, so that water can be collected in the free volume defined between said tank and said auxiliary tank.

Therefore, with the apparatus of the invention, any condensation formed on the external wall(s) of the tank can be easily collected by the auxiliary tank. Indeed, due to gravity, droplets tend to slide towards the bottom wall of the tank from where they fall into the auxiliary tank.

Tank can have any shape, and it is preferably closed so as to allow a substantially fixed amount of fluid to be present therein. In case a bottom wall is not clearly identifiable, such as in a spherical shape, the bottom wall indicates a bottom portion of the tank. The term "bottom" has the common meaning with reference to the vertical direction defined by the apparatus in the normal functioning of the same.

Auxiliary tank can also have any shape, and its dimensions are such as to allow the housing of at least a portion of the tank, in particular that portion including the bottom wall.

A free volume is present between a portion of the tank and a portion of the auxiliary tank, which can be used either to collect the condensation, or to fill the same with an additional fluid, such as water, in order to perform heat exchange with the fluid present in the tank. In this case, the water in the auxiliary tank speeds up the regeneration process of the tank fluid.

The water which can be collected in the free volume defined between the auxiliary tank and the tank can be the condensate, tap water or drain water, as described below. According to a preferred embodiment, the auxiliary tank is provided with a discharge pipe.
Indeed, water present in the auxiliary tank (which can be the result of humidy condensation) can either evaporate or be discharged by the discharge pipe. In case the auxiliary tank is used to be filled by water in order to regenerate the fluid in the tank, the discharge pipe can advantageously help to control the amount and/or the level of water inside the auxiliary tank.

In an embodiment, the washing apparatus comprises a drain pipe, connected to the chamber and to the auxiliary tank, to supply drain water from the chamber to the auxiliary tank.
In order to regenerate the fluid in the tank, the relatively warm water coming from the chamber where goods are apt to be washed can be used. This water is introduced in the auxiliary tank via the drain pipe. Therefore, there is no need of heating up additional water which requires further energy, the drain water is already relatively warm due to the washing cycles and in any case warmer than the cooled/frozen fluid in the tank.

According to a different embodiment, the washing apparatus comprises a drain pipe, connected to the water mains and to the auxiliary tank and bypassing the chamber, to supply tap water from the mains to the auxiliary tank.
In order to regenerate the fluid in the tank, the relatively warm water coming from the mains can be used. This water is introduced in auxiliary tank via the drain pipe.

Preferably, the apparatus comprises a valve and/or a pump located in the discharge pipe to control the amount of discharged fluid from the auxiliary tank.
In this way, the amount of water present in the auxiliary tank can be kept under control. The pump or valve can be activated or deactivated by a suitable control unit, for example part of a main control unit used to control the washing cycles of the apparatus.

Preferably, the apparatus includes a valve and/or a pump in the drain pipe to control the amount of water coming from the chamber or the water mains to the auxiliary tank.
In this way, the amount of water present in the auxiliary tank can be kept under control. The pump or valve can be activated or deactivated by a suitable control unit, for example part of the main control unit used to control the washing cycles of the apparatus.
Furthermore, in cooperation with the pump or valve in the discharge pipe, the drain water can be introduced and discharged into/from the auxiliary tank in pre-defined sequences. The sequences might be determined for example by the amount of time in which the drain or tap water has remained in the auxiliary tank or by the temperature reached by the drain or tap water which cools down being in contact with cold surfaces.

Advantageously, the tank has an external wall shaped so as to promote heat transfer from the auxiliary tank to the tank.
The wall shape can influence the efficiency of heat trasfer between the tank and the auxiliary tank. The most efficient shape is preferred, as long as the overall dimensions of the auxiliary tank do not exceed a given percentage of the free space in the apparatus. For example, the wall can include microfins, ondulated surfaces, etc in order to maximize the surface along which the heat exchange takes place.

Preferably, the auxiliary tank is open at its top.

Alternatively, the auxiliary tank has a closed shape so that the tank is enclosed within the auxiliary tank.
This solution might be preferred when an efficient heat transfer between tank and auxiliary tank is desired. A close-shaped auxiliary tank allows the possibility of introduction of an amount of tap or drain water that comes into contact with all the tank's walls, thus promoting the heat exchange.

In a preferred embodiment, the fluid in said tank includes water.

In a further aspect, the present invention relates to a method of fluid regeneration in a washing apparatus comprising a chamber for receiving goods to be washed, a drain pipe connected to the chamber or water mains to receive drain or tap water from the chamber or water mains, respectively, a fluid tank, an auxiliary tank housing at least a bottom wall of the fluid tank and connected to the drain pipe, and a heat pump comprising a first heat exchanger, a second heat exchanger, a compressor and a pressure lowering device forming a circuit comprising a refrigerant, the method comprising:
- operating the heat pump so as to cool said refrigerant and to heat water to be used in the chamber by means of said first heat exchanger, and to heat refrigerant and to cool the fluid contained in the tank by means of the second heat exchanger,
- regenerating the fluid contained in the tank, cooled during operation of the heat pump, by supplying drain or tap water from the chamber or water mains to the auxiliary tank.

The water used during the washing and rinsing cycles or the tap water is relatively warm and in any case generally warmer than the fluid present in the tank during functioning of the second heat exchanger. Therefore, introducing such water in the auxiliary tank via the drain pipe, allows an heat exchange between the tank and the auxiliary tank cooling the drain water introduced and warming up the fluid present in the tank.

Preferably, the regenerating includes:
- Checking the temperature of the drain or tap water in the auxiliary tank.
During the heat exchange above mentioned, the drain or tap water present in the tank reduces gradually its temperature, supplying heat to the tank's fluid, therefore such a temperature is preferably checked in order to see whether the heat exchange is still taking place or an equilibrium situation has been reached.

More preferably, the regenerating includes:
- Discharging the drain or tap water from the auxiliary thank when the temperature of the drain or tap water is below a given threshold.
When the temperature of the drain or tap water is too low,i.e. below a threshold temperature,for example below 10°C or below 5°C,then the water is discharged from the auxiliary tank. Below the threshold temperature, no effective heat exchange can take place any more, or it is too slow to be efficient.

Alternatively, the regenerating includes:
- Discharging the drain or tap water from the auxiliary tank when a given time interval has elapsed from the drain or tap water introduction into the auxiliary tank.
A time interval can be set after which the drain or tap water in the auxiliary tank is most probably too cold to provide for efficient heat exchange. The set time interval may depend on the water temperature in the chamber or water mains or on the set washing cycle.

Preferably, after the drain or tap water discharging, the method includes:
- Supplying additional drain or tap water from the chamber or water mains to the auxiliary tank.
A single supply of drain or tap water into the auxiliary tank may not be enough to regenerate all the fluid present in the tank. Therefore, in a preferred embodiment, after the discharge of the "cold" water from the auxiliary tank, new warmer water from the chamber or water mains is introduced again to re-start a heat exchange process between the "new" (or just supplied) drain or tap water and the fluid in the tank. This cycle can be repeated several times, depending on the washing cycles and the temperature of the washing water in the chamber or the tap water in the water mains.

According to a preferred embodiment, the regenerating includes:
- Operating a pump or a valve to determine the amount of drain or tap water introduced from the chamber to the auxiliary tank.

Alternatively or in combination, the regenerating includes:
- Operating a pump or a valve to determine the amount of drain or tap water discharged from the auxiliary tank.
Controlling the amount of water introduced and/or discharged into/from the auxiliary tank allows a proper control of the functioning of the same, avoiding water spilling or water overflow from the auxiliary tank. The pump(s) or valve(s) can be suitably controlled, for example, by a control unit.

In an embodiment, the regenerating includes:
- Surrounding the walls of said tank by drain or tap water, said drain or tap water filling an empty volume between said tank and said auxiliary tank.
A good efficiency in heat transfer from the drain or tap water to the fluid in the tank is obtained when the tank is preferably completely submerged in drain or tap water, so that all tank's walls are in contact with the warmer water.

In the functioning of the apparatus, preferably the heat pump is operated till the fluid in the tank reaches a predetermined condition or for a predetermined time.

Preferably, the regeneration of the liquid contained in the tank is performed either while operating the heat pump or while the heat pump is switched off.

Features and advantages of the present invention will be more readily understood from the from the following detailed description of some preferred embodiments thereof, which is given below by way of non-limiting example with reference to the accompanying drawings, in which:
- figure 1 schematically shows a washing apparatus realized according to the invention;
- figure 2 schematically shows an embodiment of the washing apparatus of figure 1;
- figure 3 schematically shows another embodiment of the washing apparatus of figure 1;
- figures 4a,4b,4c,and 4d show an overall perspective view and two perspective views with a detail removed for clarity, and a lateral view in section, respectively, of an embodiment of element of the washing apparatus of figs. 1-3;
- figures 5a and 5b show a perspective view and a lateral view in section of another embodiment of the element of figs. 4a-4d.

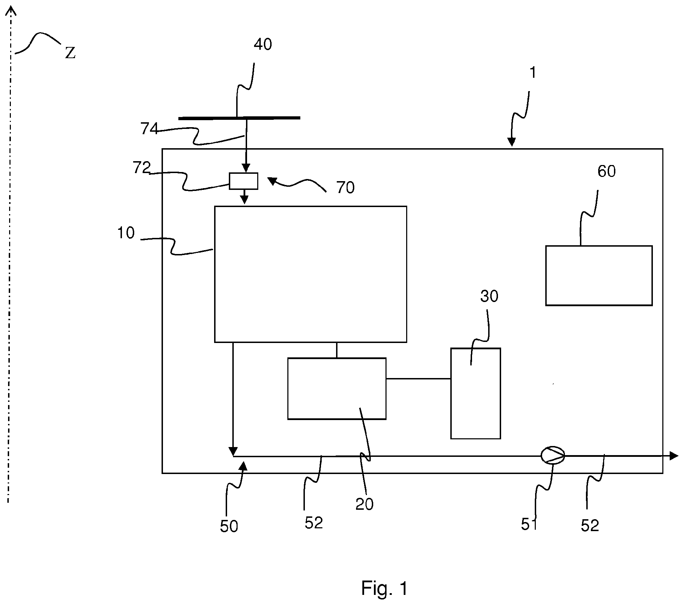

With initial reference to fig. 1, a heat pump washing apparatus realized according to the present invention is globally indicated with 1.

The heat pump washing apparatus may include preferably a washing machine to wash clothes or a dish washer. In the following, as a preferred emboldiment, a washing machine is detailed.

Washing apparatus 1 comprises a chamber 10 for treating goods, such as clothes or dishes, and advantageously further comprises a water inlet circuit 70 adapted to supply water, that can be optionally mixed with washing products, into the chamber 10. In the case of a laundry washing machine, the chamber 10 includes a tub and a drum, optionally perforated, which is rotatably contained in the tub.

The water inlet circuit 70 preferably comprises a drawer 72 and water inlet pipes 74. Advantageously, the water inlet pipes 74 fluidly connect water mains 40 to the chamber 10, preferably via the drawer 72, while the latter 72 is adapted to be filled with products, for example detersives, softener, bleaching, sparkling/rinse aid substances, etc. The drawer 72 can comprise one or more compartments (not shown) for one or more products from which a certain amount of these products, depending on the washing program, is delivered into the chamber 10.

The washing apparatus 1 also comprises a water outlet circuit 50 for discharging drain or waste water (i.e. used water optionally mixed with washing products) from the chamber 10 after process cycles (e.g., washing, rinsing cycles).

The water outlet circuit 50 can comprise a draining pump 51 and oulet draining pipes 52, for example apt to be connected to the sewage system (not shown).

The water outlet circuit 50 is advantageously fluidly connected to the bottom of the chamber 10.

Furthermore, washing apparatus 1 comprises a heat pump system 20 adapted to heat water to be used in the chamber 10. In order to heat such water, heat pump system has to absorb heat. For this purpose, apparatus 1 includes a tank 30 apt to contain a liquid from which heat is absorbed.

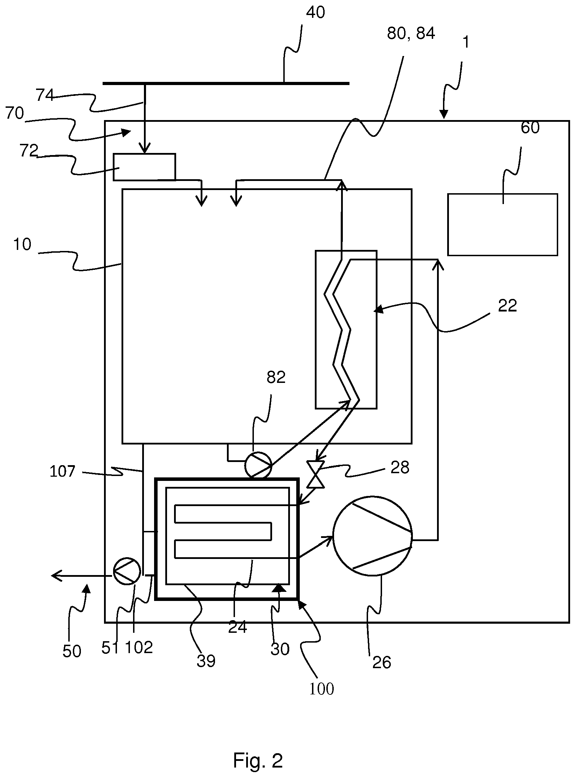

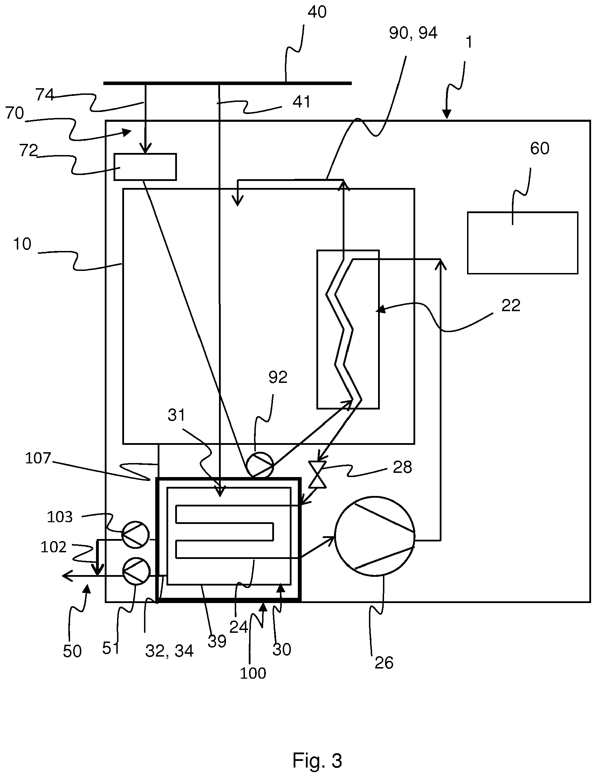

As shown in figures 2 and 3, the heat pump system 20 comprises a refrigerant circuit 21, preferably closed, in which a refrigerant can flow and which comprises: a first heat exchanger 24 acting as a condenser for cooling the refrigerant and to heat water to be used in the process chamber 10, a second heat exchanger 24 acting as an evaporator for heating the refrigerant and to cool the fluid contained in the tank 30, a compressor 26 arranged in the circuit between the first heat exchanger and the second heat exchanger, and a pressure lowering device 28 arranged between the second heat exchanger and the first heat exchanger.

In normal operation, the refrigerant is circulated within the circuit 21 by the compressor 26. The pressure lowering device is preferably a controllable valve that operates under the control of a control unit to adapt the flow resistance for the refrigerant in dependency of operating states of the heat pump system 20. In alternative embodiments, the pressure lowering device 28 may include a capillary tube, a throttle valve with fixed or variable cross section, etc (all not shown). During operation of the heat pump 20 (that is, when the compressor 26 is switched-on), heat is generated at the condenser 22 and cold is generated at the evaporator 24.

The refrigerant is pumped from the compressor 26 to the condenser 22, where liquefaction of the refrigerant takes place transferring heat from the refrigerant to the water to be used in the chamber 10. From the condenser 22, the refrigerant passes via the pressure lowering device 28 to the evaporator 24 where the refrigerant evaporates thus heat is trasnferred from the liquid contained in the tank 30 to the refrigerant. From the evaporator 24, the refrigerant runs back to the compressor 26.

The evaporator 24 can comprise a pipe or a series of pipes properly shaped and immersed in the liquid contained in the tank 30.

The condenser 22 can be located within the chamber 10, preferably on a bottom region of the same, or outside the chamber 10.

The condenser 22 is advantageously arranged so as to be able to heat the water to be used in the chamber 10.

The condenser 22 can be a tube-in-tube heat exchanger, a plate heat exchanger or similar. The water to be used in the chamber 10 is preferably made to flow through the condenser 22 so that it exhanges energy with the refrigerant by forced convention. The water can be continuously recirculated by a pump through the condenser 22 and back to the chamber 10 until the desired temperature is reached or tap water can be heated directly, by flowing through the condenser 22, before entering into the chamber 10.

Figure 2 shows an embodiment of the washing machine 1 of figure 1 wherein the water is continuously recirculated through the condenser 22 and back to the chamber 10, until the desired temperature is reached, by means of a water circuit 80.

The water circuit 80 is a recirculation circuit adapted to drain water from the chamber 10 (for example from the bottom) and to return it back into the chamber 10 at another location (for example at an upper location) via the condenser 22. Suitably, the water circuit 80 comprises a pump 82 and pipes 84 fluidly connected to the condenser 22.

In the embodiment of figure 2, the condenser 22 is positioned inside the chamber 10.

Figure 3 shows another embodiment of the washing machine 1 of figure 1 wherein tap water is heated by the condenser 22 before entering into the chamber 10.

In the embodiment of figure 3, the washing machine 1 comprises a water circuit 90.

The water circuit 90 comprises a pump 92 and pipes 94 adapted to directly drain tap water from the water mains 40 bypassing the chamber 10, to conduct the tap water through the condenser 22 and then into the chamber 10, without recirculation. In order to guarantee that the desired process temperature is reached, the heat exchanger 22 and the flow rate of the water should be suitably sized. In this embodiment, the condenser 22 operates without being in contact with waste water.

Tank 30 is preferably sealed, i.e. there is no input or output for the fluid contained therein. Preferably, tank 30 is filled in the factory during the apparatus' production and its fluid is not refilled or replaced.

Alternatively, the tank 30 may include a fluid input 31 which is directly fluidly connected to a water source, such as public water mains 40 in order to be able to directly receive tap water from it. The input 31 and the water mains 40 are suitably connected to each other through a tap water conduit 41, which is adapted to supply tap water from the water mains 40 to the tank 30 bypassing the chamber 10. This embodiment is shown in fig. 3 (however this configuration of the tank 30 applies to any other apparatus' embodiments as well).

In the embodiment with fluid input 31, the tank 30 includes also a fluid output 32 fluidly connected to the water outlet circuit 50 in order to drain away liquid from the tank 30 via the water outlet circuit 50. The output 32 and the water outlet circuit 50 are suitably connected through pipes 34.

In all embodiments, the liquid contained in the tank 30 advantageously is water.

The tank 30 is advantageously positioned on a bottom region of the washing machine 1.

The amount of liquid contained in the tank 30 and the volume of the tank 30 depends on the amount of water that must be heated up during a process cycle of the washing machine 1, the temperature required for the water, and the percentage of frozen liquid in the tank 30.

Thank 30 includes a bottom wall 39 defined as a lower portion of the same with respect to the vertical axis Z defined by the washing apparatus 1 when in operation. The shape of the tank can be of any type, advantageously it has a box-like shape. Preferably, tank 30 is closed, i.e. it defines a finite inner volume.

Advantageously, from tank 30, suitable input and output piping 30a,30b for the regrigerant protrude in order to connect the evaporator 24 to the refrigerant circuit 21.

According to the invention, apparatus 1 further includes an additional tank 100, housing a portion of the tank 30, in particular housing the bottom wall 39 of the same. A gap is present between the tank 30 and the auxiliary tank 100 so that a free volume is sandwitched between the tank and the auxiliary tank 100. Preferably, the free volume is present between the bottom wall 39 of tank 30 and a corresponding bottom wall 101 of the the auxiliary tank 100, however the free volume can be present between any other portion(s) of the tank 30 and corresponding adjacent portion(s) of the auxiliary tank 100.

Auxiliary tank 100 has any desired shape, advantageously including a concave portion in correspondance of the bottom wall 39 of tank 30 so that liquid can be collected in the concave portion. Concave portion includes the bottom wall 101.

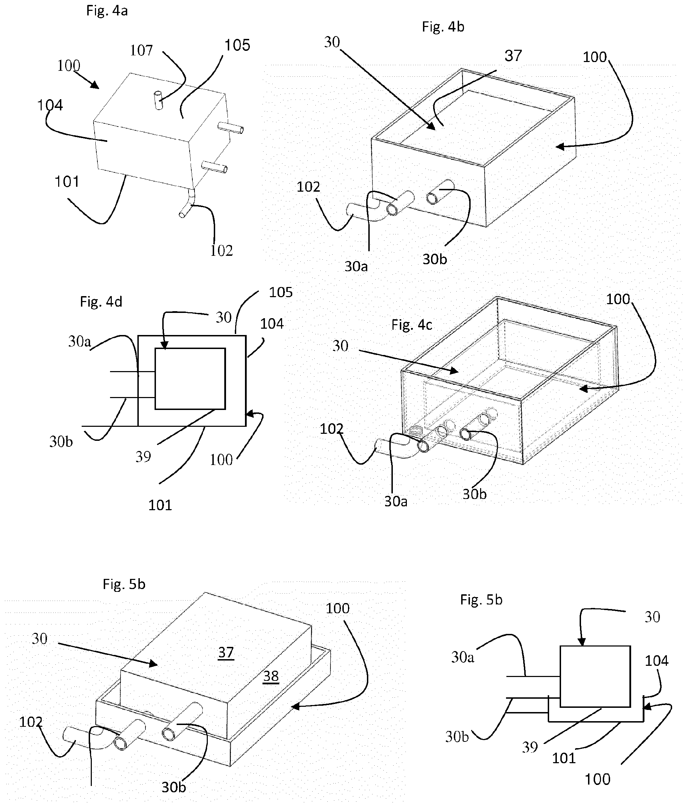

Auxiliary tank 100 in a preferred embodiment has an open shape, preferably open at the top, i.e. auxiliary tank 100 does not include a top portion. In this embodiment, therefore, auxiliary tank 100 includes a concave portion comprising the bottom wall 101 and lateral walls all indicated with 104 (walls are shown in figs. 4a-4d and 5a-5b).

In a different embodiment of the invention, auxiliary tank 100 has a closed shape. In this embodiment, auxiliary tank 100 includes a bottom wall 101, lateral walls 104 and top wall 105 which surround tank 30 completely (see figs. 4a-4d).

Advantageously, auxiliary tank 100 can include a discharge pipe 102, to discharge any fluid which may be collected into auxiliary tank. Preferably, discharge pipe 102 is located in proximity of or in correspondence of bottom wall 101 of ausiliary tank 100.

Preferably discharge pipe 102 is part of the water outlet circuit 50.

Preferably, discharge of fluid from auxiliary tank 100 via discharge pipe 102 may take place either by gravity, or with the help of a suitable discharge pump 103 visible in fig. 3. Alternatively, a valve (not shown) instead or in addition of the pump 103 can be placed in the discharge pipe 102.

Preferably, auxiliary tank 100, and thus in turn tank 30, is located below chamber 10, more preferably in correspondence of a basament of apparatus 1.

Advantageously, discharge pipe 102 is connected to water oulet circuit 50 so that the drain/waste water from chamber 10 and possible water collected by or supplied to auxiliary tank 100 are discharged outside apparatus 1 through a single pipe 52.

Auxiliary tank 100 preferably also includes a water input pipe. In this embodiment, the apparatus 1 includes a drain pipe 107 fluidly connecting the chamber 10 to the auxiliary tank 100 so that drain water (washing water or rinsing water) can flow from the chamber to the auxiliary tank 100.

In a preferred embodiment of the invention, the water from the chamber to the auxiliary tank flows by gravity into drain pipe 107.

A pump or a valve (not shown in the appended drawing) is preferably located in the drain pipe 107 between the chamber and the auxiliary tank 100 in order to control the amount of water filling the auxiliary tank.

In a different embodiment not shown in the drawings, the pipe 107 instead of connecting the chamber 10 to the auxiliary tank 100, connects the auxiliary tank 100 to the water mains, e.g., tab water is introduced inside the auxiliary tank 100. In this case, preferably a valve is present in order to regulate the water flow to the auxiliary tank.

In the preferred embodiment in which the auxiliary tank has an open shape, preferably a level sensor is present in the auxiliary tank, so that the drain water does not overfill the auxiliary tank.

Alternatively or in addition, the pump or valve, such as an on/off valve, in the drain pipe 107 can control the quantity of water that flows from the chamber 10 to the auxiliary thank.

In another embodiment, a ON/OFF valve (not shown in the appended drawings) can fluidly connect the tank and the auxiliary tank so that during the regenerating phase, as better clarified below, the water cooled or iced in the tank and the regenerating water inside the auxiliary tank coming from the chamber 10 or from the water mains are directly in contact and this promotes the heat exchange.

With now reference to figs. 5a-5b, a preferred embodiment of the tank 30 and auxiliary tank 100 according to the invention is shown in a detailed enlarged view. Closed box-shaped tank 30 is housed in corrispondence of its bottom wall 39 into open box-shaped auxiliary tank 100. Bottom wall 101 of auxiliary tank and bottom wall 39 of tank 30 are placed the first below the second leaving a gap therebetween.

Advantageously, either the input or the output pipe 30a,30b (or also both of them) for the connection of the evaporator 24 present in the tank 30 to the heat pump system 20 are used for fixing together the tank and the auxiliary tank in order to avoid relative movements. Input and/or output pipe 30a, 30b for this purpose passes through one of auxiliary tank's walls 101,104,105.

Discharge pipe 102 of auxiliary tank 100 departs from bottom wall 101, having an inlet in the latter.

With reference to a different embodiment depicted in figs. 4a-4d, auxiliary tank 100 has a closed shape (e.g. a box-like shape) and the bottom wall 101, lateral walls 104 and top wall 105 substantially face the corresponding bottom wall 39, lateral wall 38 and top wall 37 of tank 30. Preferably, each wall of tank 30 is spaced apart by a given gap from the corresponding facing wall of auxiliary tank. More preferably, the walls 101,104 and 105 of auxiliary tank 100 are parallel to corresponding walls 39, 36 and 37, respectively, of tank 30. The auxiliary tank 100 depicted in figs. 4b and 4c has the top wall 105 removed in order to show the internally placed tank 30.

Input and/or outpup pipes 30a,30b of tank 30 perform the same fixing action as described in the previous embodiment with reference to figs. 5a-5b.

Dishcarge pipe 102 has advantageously the inlet in bottom wall 101 of auxiliary tank 100. Moreover, drain input pipe 107 preferably departs from top wall 105.

During operation of the heat pump 20, the liquid in the tank 30 can be moved by a pump or impeller (not shown) in order to increase the heat transfer coefficient.

The tank 30 can be thermally coupled to the water outlet circuit 50 in order to transfer heat from waste water flowing through the pipes 52 into the liquid contained in the tank 30. For example, thermal coupling can be achieved by placing the pipes 52 of the water outlet circuit in contact with the tank 30.

Optionally, the tank 30 can be thermally coupled to electronic components and heated elements inside the machine (not shown, as for example compressor, motor, inside air). The thermal energy released by these components can be transferred to the liquid in the tank 30 for example by natural convection, forced convection or conduction.

The washing apparatus 1 suitably comprises a control unit 60 configured to control operation of the washing apparatus 1.

When the washing apparatus 1 is turned on in order to perform a predetermined washing program, the control unit 60 is advantageously configured to switch the heat pump 20 on any time water has to be heated into the chamber 10 in order to perform a process cycle (e.g., washing, rinsing, and similar) of the predetermined washing program.

The control unit 60 is also advantageously configured to switch the heat pump 20 off when the water in the chamber 10 reaches a desired process temperature or when the liquid in the tank reaches a predetermined condition (for example, when it is in large part iced).

The liquid in the tank 30 exchanges sensible heat during a cooling phase of the liquid and latent heat during a icing phase (if any). The exploitation of the latent heat allows reducing the amount of liquid required and therefore the overall dimensions of the tank 30. Accordingly, the control unit 60 is advantageously configured to operate the heat pump 20 so that the liquid in the tank 30 is at least partially freezed.

Depending on the program design, heat pump power, and wash temperature, the heat pump 20 alone might be insufficient to heat up the water to the desired process temperature in the available time. Therefore, a conventional electrical heater (not shown) may be comprised in the washing machine 1 as well. The conventional electrical heater can be suitably positioned on the bottom of the chamber 10.

As stated above, during operation of the heat pump 20 (that is while the compressor is switched-on), the liquid in the tank 30 is cooled down with respect to a starting temperature and, optionally, at least partially iced.

The low temperature of the fluid (or ice) inside tank 30 causes a decrease in the temperature of the walls 37,38,39 of the tank itself. The air in contact with the external surfaces of these walls can be cooled down and the humidity present in such coooled air can condensate. Therefore droplets form on the external surface of walls 37,38,39. Due to gravity, these droplets tend to slide towards the bottom wall 39 of tank 30 where they drip. The presence of the auxiliary tank 100 underneath allows the collection of such droplets.

In case the auxiliary tank has an open shape, the humidity collected in the auxiliary tank 100 can be absorbed again by the air present inside the apparatus 1 when the heat pump system 20 stops working. In fact, the air close to the tank and auxiliary tank may be able to adsorb the humidity previously condensed, when the temperature of the tank's walls 37,38,39 becomes high enough.

Alternatively (in case for example of a closed shape of the auxiliary tank) or in addition, the droplets are discharged through the discharge pipe 102, either by gravity or via the pump 103 action.

The cooled/iced liquid in the tank 30 preferably is to be regenerated, that is warmed up/melted towards the starting temperature, in order to be used again as energy source to the heat pump 20 in a next, optionally immediately subsequent, washing cycle.

The control unit 60 is advantageously configured to carry out the method of cooled/iced liquid regeneration according to the invention.

According to this method, cooled/iced liquid regeneration in the tank 30 is performed by introducing water directly from the chamber 10 or from the water mains (40) into the auxiliary tank 100.

According to a first embodiment of the method of the invention, in case of a auxiliary tank receiving water such as drain or tap water, the tank 30 is preferably sealed and the amount of fluid within the same does not change.

In this embodiment, suitably, the control unit 60 is configured to control start/stop of warm water entry from the chamber 10 or water mains 40 to the auxiliary tank 100 and control start/stop of cooled water exit from the auxiliary tank 100 via discharge pipe 102 to the water outlet circuit 50. This is performed with the purpose of melting any ice formation in the tank 30 thanks to the heat exchange between the cold/iced fluid in the tank and and the drain water at a higher temperature introduced in the auxiliary tank 100.

For example, in case of drain water introduction into the chamber 10, the temperature of drain water can range from about 20 to 45 °C depending on the cycle selected by the user. The temperature of the water discharged from the auxiliary tank 100 can vary from 20° to 5°C.

Starting/stopping drain or tap water entry into the auxiliary tank 100 can be performed by the control unit 60 by opening/closing at least a suitable valve (not shown) associated with the drain pipe 107.

Starting/stopping cooled water exit from the auxiliary tank 100 can be performed by the control unit 60 by opening/closing at least a suitable valve (not shown) associated with the discharge pipe 102 of the auxiliary tank 100 and preferably also switching on/off the draining pump 51 or the discharge pump 103.

The control unit 60 can be configured to manage cooled/iced liquid regeneration in the tank 30 according to a predefined regeneration time and/or in cooperation with a suitable sensor (not shown) in the auxiliary tank 100. For example, the control unit 60 can be configured to enable a given amount of drain or tap water to entry into the tank 100 and block water exit from the auxiliary tank 100 for a predefined regeneration time or till a predetermined water temperature (detected by means of said sensor) is reached in the auxiliary tank 100. The sensor could be a temperature sensor.

After the regeneration time has elapsed or the temperature of the drain or tap water has reached a value below a given threshold, the control unit 60 is preferably configured to enable water discharge from the auxiliary tank, for axample suitably commanding pump and/or valve in the discharge pipe 102.

The water supply-water discharge to/from the auxiliary tank 100 can be performed several times, for example till a suitable regeneration of the fluid in the tank 30 has been achieved.

Preferably, the amount of drain or tap water introduced in the auxiliary tank is enough to submerge all walls 37, 38, 39 of the tank 30. A level sensor or a flow meter (both not visible in the drawings) commanded by the control unit 60 can be present as well either in the drain pipe 107 or in the auxiliary tank 100.

The control unit 60 can be configured so that cooled/iced liquid regeneration in the tank 30 is performed during operation of the heat pump 20 (that is, when the compressor is switched-on) or after the heat pump 20 (that is, the compressor) is switched off, at the end of an operation cycle of the heat pump 20.

The regeneration can be performed during operation of the heat pump can take place in the embodiment in which the auxiliary tank is filled with tap water. Otherwise, in case the auxiliary tank is filled by drain water from the chamber, the regeneration is preferably performed when the heat pump is switched off.

According to a preferred embodiment, the control unit 60 is configured so that cooled/iced liquid regeneration in the tank 30 is performed during operation of the heat pump 20, within an operation cycle of the same, preferably some time before the end of the operation cycle. For example, cooled/iced liquid regeneration is performed at an intermediate time between a starting time and an ending time of the operation cycle of the heat pump 20. As stated above, this is advantageous because it enables to improve the heat pump efficiency, to reduce ice formation and to reduce the size of the tank 30. In addition, by eliminating the need of performing cooled/iced liquid regeneration after the heat pump is switched off, it enables to perform subsequent heat pump operation cycles, one immediately after the other.

The control unit can be configured so that cooled/iced liquid regeneration in the tank 30 is performed once or more times during a same operation cycle.

In a different embodiment, where the auxiliary tank 100 is used mainly for collecting condensed water, the regeneration takes place preferably introducing tap water or drain water inside the tank 30 itself.

According to a still further embodiment, the tap water from the mains for regeneration is introduced both in the tank and in the auxiliary tank in order to speed up the regeneration itself.

## Claims

1. A washing apparatus (1) comprising:
- a chamber (10) for receiving goods to be washed,
- a tank (30) having a bottom wall (39) and adapted to contain a fluid,
- a heat pump (20) system including a refrigerant circuit (21) comprising a first heat exchanger (22) being adapted to cool a refrigerant and to heat water to be used in the process chamber (10), a second heat exchanger (24) being adapted to heat said refrigerant and to cool the fluid contained in the tank (30), a compressor (26) arranged in the circuit between the first heat exchanger and the second heat exchanger, and a pressure lowering device (28) arranged between the second heat exchanger and the first heat exchanger,
**characterized in that** it comprises an auxiliary tank, wherein the tank (30) is housed at least in correspondence of its bottom wall (39) in the auxiliary tank (100), a free volume remaining between the auxiliary tank and the tank, so that water can be collected in the free volume defined between said tank (30) and said auxiliary tank (100).

2. Washing apparatus (1) according to claim 1, wherein the auxiliary tank (100) is provided with a discharge pipe (102).

3. Washing apparatus (1) according to claim 1 or 2, comprising a drain pipe (107), connected to the chamber (10) and to the auxiliary tank (100), to supply drain water from the chamber to the auxiliary tank.

4. Washing apparatus according to any of the preceding claims, comprising a drain pipe (107), connected to the water mains (40) and to the auxiliary tank (100), to supply tap water from the water mains to the auxiliary tank.

5. Washing apparatus (1) according to any of the preceding claims , comprising a valve and/or a pump (103) in the discharge pipe (102) to control the amount of discharged water from the auxiliary tank (100).

6. Washing apparatus (1) according to any of claims 2 to 5, comprising a valve and/or a pump in the drain pipe (107) to control the amount of water coming from the chamber (10) or water mains (40) to the auxiliary tank (100).

7. Washing apparatus (1) according to any of preceding claims, wherein the tank (30) has an external wall (37,38,39) shaped so as to promote heat transfer from the auxiliary tank (100) to the tank (30).

8. Washing apparatus (10) according to any of the preceding claims, wherein the auxiliary tank (100) is open at its top.

9. Washing apparatus (1) according to any of claims 1 to 7, wherein the auxiliary tank (100) has a closed shape so that the tank (30) is enclosed within the auxiliary tank (100).

10. Washing apparatus (1) according to any of the preceding claims, wherein the fluid in said tank (30) includes water.

11. Method of fluid regeneration in a washing apparatus (1) comprising a chamber (10) for receiving goods to be washed, a drain pipe (107) connected to the chamber (10) or to the water mains (40) to receive drain or tap water from the chamber or from the water mains, respectively, a fluid tank (30), an auxiliary tank (100) housing at least a bottom wall (39) of the fluid tank (30) and connected to the drain pipe (107), and a heat pump (20) comprising a first heat exchanger (22), a second heat exchanger (24), a compressor (26) and a pressure lowering device (28) forming a circuit comprising a refrigerant, the method comprising:
- operating the heat pump (20) so as to cool said refrigerant and to heat water to be used in the chamber (10) by means of said first heat exchanger (22), and to heat refrigerant and to cool the fluid contained in the tank (30) by means of the second heat exchanger (24),
- regenerating the fluid contained in the tank (30), cooled during operation of the heat pump (20), by supplying drain or tap water from the chamber or the water mains, respectively, to the auxiliary tank (100).

12. Method according to claim 11, wherein the regenerating includes:
- Checking the temperature of the drain or tap water in the auxiliary tank (100).

13. Method according to claim 12, wherein the regenerating includes:
- Discharging the drain water from the auxiliary thank (100) when the temperature of the drain or tap water in the auxiliary tank is below a given threshold.

14. Method according to claim 11, wherein the regenerating includes:
- Discharging the drain or tap water from the auxiliary tank (100) when a given time interval has elapsed from the drain water introduction into the auxiliary tank (100).

15. Method according to claim 13 or 14, including, after the drain water discharging:
- Supplying additional drain or tap water from the chamber (10) or from the water mains (40) to the auxiliary tank (100).

16. Method according to any of claims 11-15, wherein the regenerating includes:
- Operating a pump or a valve to determine the amount of drain or tap water introduced from the chamber (10) or the water mains (40) to the auxiliary tank (100).

17. Method according to any of claims 11-16, wherein the regenerating includes:
- Operating a pump or a valve to determine the amount of drain or tap water discharged from the auxiliary tank (100).

18. Method according to any of claims 11-17, wherein the regenerating includes:
- Surrounding the walls (37,38,39) of said tank (30) by drain or tap water, said drain or tap water filling an empty volume between said tank (30) and said auxiliary tank (100).

## Patentansprüche

1. Waschvorrichtung (1), umfassend:
- eine Kammer (10) zum Aufnehmen von zu waschendem Gut,
- einen Tank (30), der eine Bodenwand (39) aufweist und dafür ausgelegt ist, ein Fluid zu enthalten,
- ein Wärmepumpensystem (20), einschließlich eines Kältemittelkreises (21), umfassend einen ersten Wärmetauscher (22), der dafür ausgelegt ist, ein Kältemittel zu kühlen und Wasser, das in der Prozesskammer (10) verwendet werden soll, zu erhitzen, einen zweiten Wärmetauscher (24), der dafür ausgelegt ist, das Kältemittel zu erhitzen und das in dem Tank (30) enthaltenen Fluid zu kühlen, einen Kompressor (26), der in dem Kreis zwischen dem ersten Wärmetauscher und dem zweiten Wärmetauscher angeordnet ist, und eine Druckminderungsvorrichtung (28), die zwischen dem zweiten Wärmetauscher und dem ersten Wärmetauscher angeordnet ist,
**dadurch gekennzeichnet, dass** sie einen Hilfstank umfasst, wobei der Tank (30) wenigstens mit seiner Bodenwand (39) in dem Hilfstank (100) untergebracht ist, wobei ein freies Volumen zwischen dem Hilfstank und dem Tank verbleibt, so das Wasser in dem freien Volumen, das zwischen dem Tank (30) und dem Hilfstank (100) definiert ist, gesammelt werden kann.

2. Waschvorrichtung (1) gemäß Anspruch 1, wobei der Hilfstank (100) mit einem Auslassrohr (102) versehen ist.

3. Waschvorrichtung (1) gemäß Anspruch 1 oder 2, umfassend ein Abflussrohr (107), das mit der Kammer (10) und mit dem Hilfstank (100) verbunden ist, um dem Hilfstank Abwasser aus der Kammer zuzuführen.

4. Waschvorrichtung gemäß einem der vorstehenden Ansprüche, umfassend ein Abflussrohr (107), das mit dem Wassernetz (40) und mit dem Hilfstank (100) verbunden ist, um dem Hilfstank Leitungswasser aus dem Wassernetz zuzuführen.

5. Waschvorrichtung (1) gemäß einem der vorstehenden Ansprüche, umfassend ein Ventil und/oder eine Pumpe (103) in dem Auslassrohr (102), um die Menge an ausgelassenem Wasser aus dem Hilfstank (100) zu steuern.

6. Waschvorrichtung (1) gemäß einem der Ansprüche 2 bis 5, umfassend ein Ventil und/oder eine Pumpe in dem Abflussrohr (107), um die Menge an Wasser, das aus der Kammer (10) oder dem Wassernetz (40) in den Hilfstank (100) kommt, zu steuern.

7. Waschvorrichtung (1) gemäß einem der vorstehenden Ansprüche, wobei der Tank (30) eine Außenwand (37, 38, 39) aufweist, die geformt ist, um die Wärmeübertragung von dem Hilfstank (100) zu dem Tank (30) zu fördern.

8. Waschvorrichtung (10) gemäß einem der vorstehenden Ansprüche, wobei der Hilfstank (100) an seiner Oberseite offen ist.

9. Waschvorrichtung (1) gemäß einem der Ansprüche 1 bis 7, wobei der Hilfstank (100) eine geschlossene Form aufweist, so dass der Tank (30) in dem Hilfstank (100) eingeschlossen ist.

10. Waschvorrichtung (1) gemäß einem der vorstehenden Ansprüche, wobei das Fluid in dem Tank (30) Wasser enthält.

11. Verfahren zur Fluidregeneration in einer Waschvorrichtung (1) umfassend eine Kammer (10) zum Aufnehmen von zu waschendem Gut, ein Abflussrohr (107), das mit der Kammer (10) oder mit dem Wassernetz (40) verbunden ist, um Ab- oder Leitungswasser aus der Kammer bzw. aus dem Wassernetz aufzunehmen, einen Fluidtank (30), einen Hilfstank (100), der wenigstens eine Bodenwand (39) des Fluidtanks (30) aufnimmt und mit dem Abflussrohr (107) verbunden ist, und eine Wärmepumpe (20), die einen ersten Wärmetauscher (22), einen zweiten Wärmetauscher (24), einen Kompressor (26) und eine Druckminderungsvorrichtung (28) umfasst und einen Kreislauf bildet, der ein Kältemittel umfasst, wobei das Verfahren umfasst:
- Betreiben der Wärmepumpe (20), um mithilfe des ersten Wärmetauschers (22) das Kältemittel zu kühlen und Wasser, das in der Kammer (10) verwendet werden soll, zu erhitzen, und um mithilfe des zweiten Wärmetauschers (24) Kältemittel zu erhitzen und das in dem Tank (30) enthaltene Fluid zu kühlen,
- Regenerieren des in dem Tank (30) enthaltenen Fluids, das während des Betriebs der Wärmepumpe (20) gekühlt wurde, durch Zuführen von Ab- oder Leitungswasser aus der Kammer bzw. dem Wassernetz zu dem Hilfstank (100).

12. Verfahren gemäß Anspruch 11, wobei das Regenerieren umfasst:
- Überprüfen der Temperatur des Ab- oder Leitungswassers in dem Hilfstank (100).

13. Verfahren gemäß Anspruch 12, wobei das Regenerieren umfasst:
- Ablassen des Abwassers aus dem Hilfstank (100), wenn die Temperatur des Ab- oder Leitungswassers in dem Hilfstank unter einem gegebenen Schwellenwert liegt.

14. Verfahren gemäß Anspruch 11, wobei das Regenerieren umfasst:
- Ablassen des Ab- oder Leitungswassers aus dem Hilfstank (100), wenn ein gegebenes Zeitintervall ab dem Einführen des Abwassers in den Hilfstank (100) verstrichen ist.

15. Verfahren gemäß Anspruch 13 oder 14, umfassend nach dem Ablassen des Abwassers:
- Zuführen von zusätzlichem Ab- oder Leitungswasser aus der Kammer (10) oder aus dem Wassernetz (40) zu dem Hilfstank (100).

16. Verfahren gemäß einem der Ansprüche 11-15, wobei das Regenerieren umfasst:
- Betreiben einer Pumpe oder eines Ventils zum Bestimmen der Menge an Ab- oder Leitungswasser, das dem Hilfstank (100) aus der Kammer (10) oder dem Wassernetz (40) zugeführt wird.

17. Verfahren gemäß einem der Ansprüche 11-16, wobei das Regenerieren umfasst:
- Betreiben einer Pumpe oder eines Ventils zum Bestimmen der Menge an Ab- oder Leitungswasser, das aus dem Hilfstank (100) abgelassen wird.

18. Verfahren gemäß einem der Ansprüche 11-17, wobei das Regenerieren umfasst:
- Umgeben der Wände (37, 38, 39) des Tanks (30) mit Ab- oder Leitungswasser, wobei das Ab- oder Leitungswasser ein leeres Volumen zwischen dem Tank (30) und dem Hilfstank (100) füllt.

## Revendications

1. Appareil de lavage (1), comprenant :
- une chambre (10) destinée à recevoir des articles à laver,
- un réservoir (30) présentant une paroi inférieure (39) et apte à contenir un fluide,
- un système de pompe à chaleur (20) comprenant un circuit de réfrigérant (21) comprenant un premier échangeur de chaleur (22) apte à refroidir un réfrigérant et à chauffer de l'eau à utiliser dans la chambre de traitement (10), un second échangeur de chaleur (24) apte à chauffer ledit réfrigérant et à refroidir le fluide contenu dans le réservoir (30), un compresseur (26) agencé dans le circuit entre le premier échangeur de chaleur et le second échangeur de chaleur, et un dispositif d'abaissement de pression (28) agencé entre le second échangeur de chaleur et le premier échangeur de chaleur,
**caractérisé en ce qu'**il comprend un réservoir auxiliaire, dans lequel le réservoir (30) est logé au moins en correspondance de sa paroi inférieure (39) dans le réservoir auxiliaire (100), un volume libre restant entre le réservoir auxiliaire et le réservoir, de telle sorte que de l'eau puisse être collectée dans le volume libre défini entre ledit réservoir (30) et ledit réservoir auxiliaire (100).

2. Appareil de lavage (1) selon la revendication 1, dans lequel le réservoir auxiliaire (100) est pourvu d'un tuyau de décharge (102).

3. Appareil de lavage (1) selon la revendication 1 ou 2, comprenant un tuyau de drainage (107), connecté à la chambre (10) et au réservoir auxiliaire (100), afin de fournir de l'eau de drainage à partir de la chambre au réservoir auxiliaire.

4. Appareil de lavage selon l'une quelconque des revendications précédentes, comprenant un tuyau de drainage (107), connecté au réseau de distribution d'eau (40) et au réservoir auxiliaire (100), afin de fournir de l'eau du robinet à partir du réseau de distribution d'eau au réservoir auxiliaire.

5. Appareil de lavage (1) selon l'une quelconque des revendications précédentes, comprenant une vanne et/ou une pompe (103) dans le tuyau de décharge (102) pour commander la quantité d'eau déchargée à partir du réservoir auxiliaire (100).

6. Appareil de lavage (1) selon l'une quelconque des revendications 2 à 5, comprenant une vanne et/ou une pompe dans le tuyau de drainage (107) pour commander la quantité d'eau entrante à partir de la chambre (10) ou du réseau de distribution d'eau (40) jusqu'au réservoir auxiliaire (100).

7. Appareil de lavage (1) selon l'une quelconque des revendications précédentes, dans lequel le réservoir (30) présente une paroi externe (37,38,39) configurée de manière à favoriser un transfert de chaleur du réservoir auxiliaire (100) au réservoir (30).

8. Appareil de lavage (10) selon l'une quelconque des revendications précédentes, dans lequel le réservoir auxiliaire (100) est ouvert à son sommet.

9. Appareil de lavage (1) selon l'une quelconque des revendications 1 à 7, dans lequel le réservoir auxiliaire (100) présente une configuration fermée de telle sorte que le réservoir (30) soit enfermé à l'intérieur du réservoir auxiliaire (100).

10. Appareil de lavage (1) selon l'une quelconque des revendications précédentes, dans lequel le fluide dans ledit réservoir (30) comprend l'eau.

11. Procédé pour régénérer un fluide dans un appareil de lavage (1) comprenant une chambre (10) destinée à recevoir des articles à laver, un tuyau de drainage (107) connecté à la chambre (10) ou au réseau de distribution d'eau (40) afin de recevoir de l'eau de drainage ou de l'eau du robinet à partir de la chambre ou à partir du réseau de distribution d'eau, respectivement, un réservoir de fluide (30), un réservoir auxiliaire (100) incorporant au moins une paroi inférieure (39) du réservoir de fluide (30) et connecté au tuyau de drainage (107), et une pompe à chaleur (20) comprenant un premier échangeur de chaleur (22), un second échangeur de chaleur (24), un compresseur (26) et un dispositif d'abaissement de pression (28) formant un circuit comprenant un réfrigérant, le procédé comprenant les étapes suivantes:
- actionner la pompe à chaleur (20) de manière à refroidir ledit réfrigérant et à chauffer l'eau à utiliser dans la chambre (10) à l'aide dudit premier échangeur de chaleur (22), et à chauffer le réfrigérant et à refroidir le fluide contenu dans le réservoir (30) à l'aide du second échangeur de chaleur (24),
- régénérer le fluide contenu dans le réservoir (30), refroidi pendant le fonctionnement de la pompe à chaleur (20), en fournissant de l'eau de drainage ou de l'eau du robinet à partir de la chambre ou du réseau de distribution d'eau, respectivement, au réservoir auxiliaire (100).

12. Procédé selon la revendication 11, dans lequel la régénération comprend l'étape suivante:
- contrôler la température de l'eau de drainage ou de l'eau du robinet dans le réservoir auxiliaire (100).

13. Procédé selon la revendication 12, dans lequel la régénération comprend l'étape suivante:
- décharger l'eau de drainage à partir du réservoir auxiliaire (100) lorsque la température de l'eau de drainage ou de l'eau du robinet dans le réservoir auxiliaire est inférieure à un seuil donné.

14. Procédé selon la revendication 11, dans lequel la régénération comprend l'étape suivante:
- décharger l'eau de drainage ou l'eau du robinet à partir du réservoir auxiliaire (100) lorsqu'un intervalle de temps donné s'est écoulé depuis l'introduction de l'eau de drainage dans le réservoir auxiliaire (100).

15. Procédé selon la revendication 13 ou 14, comprenant, après la décharge de l'eau de drainage, l'étape suivante:
- fournir de l'eau de drainage ou de l'eau du robinet supplémentaire à partir de la chambre (10) ou à partir du réseau de distribution d'eau (40) au réservoir auxiliaire (100).

16. Procédé selon l'une quelconque des revendications 11 à 15, dans lequel la régénération comprend l'étape suivante:
- actionner une pompe ou une vanne afin de déterminer la quantité d'eau de drainage ou d'eau du robinet introduite à partir de la chambre (10) ou du réseau de distribution d'eau (40) dans le réservoir auxiliaire (100).

17. Procédé selon l'une quelconque des revendications 11 à 16, dans lequel la régénération comprend l'étape suivante:
- actionner une pompe ou une vanne afin de déterminer la quantité d'eau de drainage ou d'eau du robinet déchargée à partir du réservoir auxiliaire (100).

18. Procédé selon l'une quelconque des revendications 11 à 17, dans lequel la régénération comprend l'étape suivante:
- entourer les parois (37,38,39) dudit réservoir (30) par de l'eau de drainage ou de l'eau du robinet, ladite eau de drainage ou du robinet remplissant un volume vide entre ledit réservoir (30) et ledit réservoir auxiliaire (100).
